# EUROPÄISCHE PATENTSCHRIFT

(11) **EP 2 746 718 B1**
(45) Veröffentlichungstag und Bekanntmachung des Hinweises auf die Patenterteilung: **04.11.2015**
(21) Anmeldenummer: 13195461.2
(22) Anmeldetag: 03.12.2013
(51) Int. Cl.: G01B 9/02

(54) **Interferometer**
Interferometer
Interféromètre

(30) Priorität: 20.12.2012 DE 102012223887; 31.01.2013 DE 102013201611
(43) Veröffentlichungstag der Anmeldung: 25.06.2014
(73) Patentinhaber: Dr. Johannes Heidenhain GmbH, 83301 Traunreut (DE)
(72) Erfinder: Holzapfel, Wolfgang, 83119 Obing (DE); Drescher, Jörg, 83122 Samerberg (DE); Meissner, Markus, 83236 Übersee (DE); Joerger, Ralph, 83278 Traunstein (DE); Musch, Bernhard, 83301 Traunreut (DE); Spanner, Erwin, 83278 Traunstein (DE); Kälberer, Thomas, 86529 Schrobenhausen (DE)

(56) Entgegenhaltungen:
- DE-A1- 3 923 768
- DE-A1- 4 028 051
- DE-A1-102008 043 540

## Beschreibung

Die vorliegende Erfindung betrifft ein Interferometer gemäß dem Oberbegriff von Anspruch 1.

Ein gattungsgemäßes Interferometer ist aus der US 6,208,424 B1 bekannt. Hierbei ist eine Lichtquelle vorgesehen, die ein Strahlenbündel in Richtung eines Strahlteilers emittiert. Über den Strahlteiler wird das Strahlenbündel in ein Messstrahlenbündel und ein Referenzstrahlenbündel aufgeteilt. Das Messstrahlenbündel propagiert dann in einem sich in einer ersten Richtung erstreckenden Messarm zwischen dem Strahlteiler und einem Messreflektor. Der Messreflektor bewirkt einen Versatz zwischen dem darauf einfallenden Messstrahlenbündel und dem davon zurückreflektierten Messstrahlenbündel senkrecht zur Einfallsrichtung. Das Referenzstrahlenbündel propagiert in einem sich in einer zweiten Richtung erstreckenden Referenzarm zwischen dem Strahlteiler und einem Referenzreflektor, wobei die zweite Richtung senkrecht zur ersten Richtung orientiert ist. Ferner ist eine Detektoranordnung vorgesehen, der die überlagerten und wiedervereinigten Mess- und Referenzstrahlenbündel zuführbar sind und über die ein abstandsabhängiges Interferenzsignal bezüglich der Position des Messreflektors erzeugbar ist.

Über die gewählte Ausbildung des Messreflektors und den darüber erzeugten Versatz zwischen den auf den Messreflektor einfallenden und zurückreflektierten Strahlenbündeln lassen sich ansonsten auftretende periodische Signalfehler minimieren. Solche periodischen Signalfehler können beispielsweise durch nicht-perfekte polarisationsoptische Elemente oder aber durch andere optische Elemente in den Strahlengängen der Mess- und Referenzstrahlenbündel verursacht werden.

Der in der US 6,208,424 B1 konkret beschriebene Messreflektor besteht aus zwei senkrecht zueinander orientierten Planspiegeln, die den oben erwähnten räumlichen Versatz der davon zurückreflektierten Strahlenbündel gegenüber den darauf einfallenden Strahlenbündeln bewirken. Darüber hinaus ist in dieser Druckschrift zwar pauschal erwähnt, dass der Messreflektor auch anderweitig ausgebildet sein könnte, Details zu einer alternativen Ausgestaltung sind jedoch nicht angegeben.

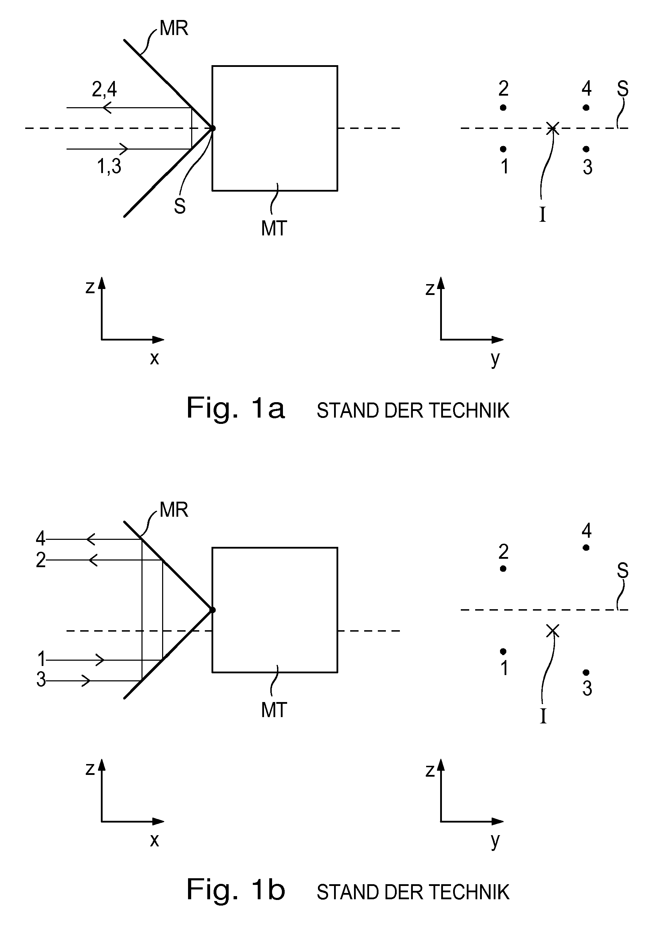

Bei einer Ausbildung des Messreflektors mit zwei senkrecht zueinander orientierten Planspiegeln resultieren Probleme im Fall einer Verschiebung des Messreflektors entlang einer Richtung, die orthogonal zur Messrichtung orientiert ist. Unter der Messrichtung sei hierbei diejenige Richtung verstanden, entlang der der Messreflektor beweglich angeordnet ist. In der US 6,208,424 B1 wird die Messrichtung mit x bezeichnet und die erwähnte hierzu orthogonale Richtung mit z. Zur weiteren Erläuterung dieser Probleme sei auf die Figuren 1a und 1b verwiesen. Figur 1a zeigt hierbei links den aus zwei Planspiegeln bestehenden Messreflektor MR, der an einem Maschinenteil MT angeordnet ist und dessen Position entlang der Messrichtung x mit Hilfe des Interferometers bestimmt werden soll. Gezeigt ist in Figur 1a ferner das zweimal auf den Messreflektor MR einfallende Messstrahlenbündel, wobei mit dem Bezugszeichen 1 das erstmalig einfallende Messstrahlenbündel bezeichnet ist, mit dem Bezugszeichen 2 das erstmalig vom Messreflektor MR zurückreflektierte Messstrahlenbündel, mit dem Bezugszeichen 3 das zum zweiten Mal auf den Messreflektor MR einfallende Messstrahlenbündel und mit dem Bezugszeichen 4 das zum zweiten Mal vom Messreflektor MR zurückreflektierte Messstrahlenbündel. Zwischen dem ersten und zweiten Auftreffen des Messstrahlenbündels auf dem Messreflektor MR beaufschlagt das Messstrahlenbündel einen nicht dargestellten Retroreflektor. Im rechten Teil der Figur 1a ist eine Draufsicht auf den Messreflektor MR und die räumliche Anordnung der einzelnen Messstrahlenbündel 1 - 4 bzw. das resultierende rechteckige Strahlquerschnittsmuster - nachfolgend Spotpattern genannt - in der yz-Ebene dargestellt. S bezeichnet hier die entlang der y-Richtung orientierte Spiegelachse des Messreflektors MR, mit I wird das Inversionszentrum des - ebenfalls nicht in der Figur dargestellten - Retroreflektors bezeichnet. Das Inversionszentrum I liegt wie ersichtlich bei der vorgesehenen Position des Messreflektors MR entlang der z-Richtung auf der Spiegelachse S des Messreflektors MR.

In Figur 1b sind nunmehr die Verhältnisse dargestellt, wenn der Messreflektor MR bzw. das Maschinenteil MT gegenüber der Position in Figur 1a entlang der z-Richtung nach oben versetzt wird; dies kann z.B. durch ungenaue Führungen oder dgl. verursacht werden. Wie aus dem rechten Teil der Figur 1b ersichtlich, liegt das Inversionszentrum I des Retroreflektors jetzt nicht mehr auf der Spiegelachse S des Messreflektors MR, was zur Folge hat, dass die Messstrahlenbündel 3, 4 vor und nach dem zweiten Auftreffen auf den Messreflektor MR einen größeren Abstand zur Spiegelachse S aufweisen als beim ersten Auftreffen auf den Messreflektor MR. Es resultiert das im rechten Teil der Figur 1b dargestellte Spotpattern, das nun nicht mehr rechteckig ist.

Gemäß den Darstellungen der Figuren 1a und 1b, ist das resultierende Spotpattern bzw. die räumliche Anordnung der Messstrahlenbündel im Messarm beim bekannten Interferometer aus der US 6,208,424 B1 damit nicht invariant gegenüber einer Verschiebung des Messreflektors in z-Richtung, d.h. gegenüber einer Verschiebung entlang einer von der Messrichtung abweichenden Richtung. Ein sich derart änderndes Spotpattern hat zur Folge, dass ein insgesamt größeres erforderliches Bauvolumen für das Interferometer bzw. die Interferometer-Optik resultiert. Die Dimensionierung des Messreflektors muss derart erfolgen, dass auch im Fall einer Verschiebung desselbigen sichergestellt ist, dass die Messstrahlenbündel alle darauf einfallen. Desweiteren ist aufgrund des sich derart ändernden Spotpatterns erforderlich, dass relativ große Strahldurchmesser gewählt werden müssen, um einen hinreichenden Überlapp zwischen den Mess- und Referenzstrahlenbündeln bei der Wiedervereinigung derselbigen zu gewährleisten; andernfalls würde ein zu geringer Modulationsgrad der abstandsabhängigen Interferenzsignale resultieren. Ferner führt die erläuterte Verschiebung der Messstrahlenbündel dazu, dass diese anschließend andere Bereiche und Grenzflächen nachgeordneter optischer Komponenten durchlaufen bzw. beaufschlagen; Unebenheiten dieser Komponenten verursachen dann Fehler bei der Positionsmessung.

Aus der DE 40 28 051 A1 ist ein Gitterinterferometer mit mindestens zwei hintereinander geschalteten Beugungsittern bekannt, in dem die daran auftretenden Beugungsordnungen mehrfach genutzt werden. Die vorgeschlagene Interferometer-Architektur unterscheidet sich mangels eines separaten Referenz-Reflektors grundlegend von derjenigen aus der vorher erläuterten Druckschrift und bietet daher keine Lösungsansätze für die vorstehend diskutierten Probleme.

Interferentielle Positionsmesseinrichtungen mit gegenüber der US 6,208,424 B1 unterschiedlichen Anordnungen der Einzelkomponenten sind ferner aus den Druckschriften DE 39 23 768A1 und DE 10 2008 043 540 A1 bekannt; mangels übereinstimmender Grund-Architektur liefern auch diese Dokumente keine Lösung der erörterten Probleme.

Aufgabe der vorliegenden Erfindung ist es, ein Interferometer anzugeben, bei dem neben einer Minimierung von zyklischen Signalfehlern ferner gewährleistet ist, dass das resultierende Spotpattern zumindest im Messarm möglichst invariant gegenüber Verschiebungen des Messreflektors entlang von Achsen ist, die nicht mit der Messrichtung zusammenfallen.

Diese Aufgabe wird erfindungsgemäß durch ein Interferometer mit den Merkmalen des Anspruchs 1 gelöst.

Vorteilhafte Ausführungen des erfindungsgemäßen Interferometers ergeben sich aus den Maßnahmen in den abhängigen Ansprüchen.

Das erfindungsgemäße Interferometer umfasst eine Lichtquelle und einen Strahlteiler, der das von der Lichtquelle emittierte Strahlenbündel in ein Messstrahlenbündel und ein Referenzstrahlenbündel aufteilt. In einem sich in einer ersten Richtung erstreckenden Messarm propagiert das Messstrahlenbündel zwischen dem Strahlteiler und einem Messreflektor, wobei der Messreflektor einen Versatz zwischen dem darauf einfallenden Messstrahlenbündel und dem davon zurückreflektierten Messstrahlenbündel senkrecht zur Einfallsrichtung bewirkt. In einem sich in einer zweiten Richtung erstreckenden Referenzarm propagiert das Referenzstrahlenbündel zwischen dem Strahlteiler und einem Referenzreflektor. Über eine Detektoranordnung, der die überlagerten und wiedervereinigten Mess- und Referenzstrahlenbündel zuführbar sind, ist ein abstandsabhängiges Interferenzsignal bezüglich der Position des Messreflektors erzeugbar. Der Messreflektor umfasst jeweils mindestens ein Transmissionsgitter sowie ein Reflektorelement.

In einer vorteilhaften Variante ist der Messreflektor derart ausgebildet und angeordnet, dass das darauf entlang der ersten Richtung einfallende Messstrahlenbündel zunächst das Transmissionsgitter an einem ersten Auftreffort beaufschlagt und eine erste Ablenkung in einer ersten Versatzebene erfährt, dann am Reflektorelement wieder in Richtung des Transmissionsgitters zurückreflektiert wird und das Transmissionsgitter an einem zweiten Auftreffort beaufschlagt, wo das Messstrahlenbündel eine zweite Ablenkung in der ersten Versatzebene erfährt und dann gegenüber der Einfallsrichtung entlang der zweiten Richtung parallel versetzt in Richtung des Strahlteilers propagiert.

Hierbei kann die erste Versatzebene durch die erste Richtung und die zweite Richtung aufgespannt sein.

Es ist ferner möglich, dass der Referenzreflektor jeweils mindestens ein Transmissionsgitter sowie ein Reflektorelement umfasst.

Dabei kann der Referenzreflektor derart ausgebildet und angeordnet sein, dass
- das darauf entlang der zweiten Richtung einfallende Referenzstrahlenbündel zunächst das Transmissionsgitter an einem ersten Auftreffort beaufschlagt und eine erste Ablenkung in einer zweiten Versatzebene erfährt, wobei die zweite Versatzebene senkrecht zur ersten Versatzebene orientiert ist,
- dann das Referenzstrahlenbündel am Reflektorelement wieder in Richtung des Transmissionsgitters zurückreflektiert wird und das Transmissionsgitter an einem zweiten Auftreffort beaufschlagt, wo das Referenzstrahlenbündel eine zweite Ablenkung in der zweiten Versatzebene erfährt und dann gegenüber der Einfallsrichtung entlang einer dritten Richtung parallel versetzt in Richtung des Strahlteilers propagiert.

Es kann vorgesehen werden, dass die zweite Versatzebene durch die zweite Richtung und die dritte Richtung aufgespannt ist, wobei die dritte Richtung senkrecht zur ersten und zweiten Richtung orientiert ist.

Ferner ist möglich, dass das Reflektorelement als Planspiegel ausgebildet ist.

Alternativ kann das Reflektorelement auch als Reflexionsgitter ausgebildet sein.

In einer weiteren Ausführungsform kann im Strahlengang des vom Messreflektor zurückreflektierten Messstrahlenbündels ein polarisationsoptisches Element angeordnet sein.

Ferner kann im Strahlengang des vom Referenzreflektor zurückreflektierten Referenzstrahlenbündels ein polarisationsoptisches Element angeordnet sein.

Dabei kann das polarisationsoptische Element als Linearpolarisator oder als Kombination eines Linearpolarisators und eines Lambda/2-Plättchens ausgebildet sein.

Es ist desweiteren möglich, dass die erste Richtung und die zweite Richtung senkrecht zueinander orientiert sind.

In einer weiteren Ausführungsform können die vom Messreflektor und vom Referenzreflektor erstmalig zurückreflektierten Mess- und Referenzstrahlenbündel nach dem Durchlaufen des Strahlteilers jeweils auf einen Retroreflektor auftreffen, über welches das Mess- und Referenzstrahlenbündel jeweils eine räumlich versetzte Rückreflexion in Richtung des Strahlteilerelements erfahren, dieses durchlaufen und dann ein zweites Mal den Messreflektor und den Referenzreflektor beaufschlagen, bevor die davon zurückreflektierten Mess- und Referenzstrahlenbündel an der Detektoranordnung zur interferierenden Überlagerung kommen.

Über die erfindungsgemäßen Maßnahmen ist zum einen sichergestellt, dass periodische Signalfehler hinreichend minimiert werden. Desweiteren ist durch die gewählte Ausbildung des Messreflektors gewährleistet, dass auch bei einer Verschiebung desselbigen entlang einer Achse, die nicht mit der Messrichtung zusammenfällt, das resultierende Spotpattern im Messarm unverändert bleibt. Dies hat zur Folge, dass die gesamte Optik des erfindungsgemäßen Interferometers kleiner bauend ausgebildet werden kann und resultierende Fehler bei der Positionsmessung aufgrund von Strahlverschiebungen vermieden werden können.

Desweiteren lässt sich über die erfindungsgemäße Ausbildung des Messreflektors ein gewünschtes Spotpattern flexibel einstellen. Aufgrund der üblicherweise limitierten Platzverhältnisse in derartigen Anwendungen stellt dies einen weiteren wichtigen Vorteil gegenüber dem eingangs diskutierten Stand der Technik mit einem nicht definiert veränderbaren Spotpattern dar.

Ferner ist zu erwähnen, dass auf Seiten des Messreflektors nun keine aufwändige Anordnung von Spiegeln in einer 90°-Konfiguration mehr erforderlich ist, wie dies in der US 6,208,424 B1 vorgesehen war. Eine solche Spiegel-Anordnung erfordert bei der Montage einen hohen Justageaufwand; zudem resultiert bei einer solchen Ausbildung des Messreflektors ein deutlich erhöhtes Gewicht auf Seiten des bewegten Maschinenteiles. Die erfindungsgemäße Lösung erfordert demgegenüber keinen derartigen Justageaufwand, zudem ist der Messreflektor deutlich leichter und damit die mit dem Maschinenteil bewegte Masse erheblich kleiner.

Als weiterer Vorteil der erfindungsgemäßen Ausbildung des Messreflektors ist anzuführen, dass darüber ein Strahlversatz in beide Richtungen senkrecht zur Messrichtung erfolgen kann; die ist etwa bei einem als Dachkantprisma ausgebildeten Messreflektor nicht möglich. Auf diese Art und Weise lassen sich variable Spotpattern erzeugen, z.B. 4 Spots in einer Reihe etc.. Dies wiederum ist mitunter wichtig, um eventuell vorliegende Restriktionen durch das jeweilige Maschinendesigns berücksichtigen zu können.

Analog zum Messreflektor kann im Rahmen der vorliegenden Erfindung in einer vorteilhaften Ausführungsform im Übrigen auch der Referenzreflektor ausgebildet werden; dies ist jedoch nicht zwingend erforderlich.

Die erfindungsgemäßen Maßnahmen können zudem nicht nur in Interferometern mit senkrecht zueinander orientierten Mess- und Referenzarmen eingesetzt werden, sondern auch in alternativen Anordnungsvarianten, z.B. bei parallel orientierten Mess- und Referenzarmen.

Weitere Vorteile sowie Einzelheiten der vorliegenden Erfindung ergeben sich aus der nachfolgenden Beschreibung eines Ausführungsbeispiels anhand der beiliegenden Figuren.

Es zeigt hierbei
- Figur 1a, 1b: je eine Darstellung zur Erläuterung des Standes der Technik;
- Figur 2a: eine erste Ansicht des Strahlengangs in einem Ausführungsbeispiel des erfindungsgemäßen Interferometers;
- Figur 2b: eine zweite Ansicht des Strahlengangs in einem Ausführungsbeispiel des erfindungsgemäßen Interferometers;
- Figur 2c: eine dritte Ansicht des Strahlengangs in einem Ausführungsbeispiel des erfindungsgemäßen Interferometers;
- Figur 3a, 3b: jeweils mehrere Darstellungen zur Erläuterung der resultierenden Spotpattern im Messarm des erfindungsgemäßen Interferometers bei unterschiedlichen Positionen des Messreflektors entlang der z-Achse;
- Figur 4: ein Ausführungsbeispiel des Messreflektors im erfindungsgemäßen Interferometer;
- Figur 5: ein weiteres Ausführungsbeispiel des Messreflektors im erfindungsgemäßen Interferometer;
- Figur 6a, 6b: jeweils eine weitere Möglichkeit zur Realisierung definierter Spotpattern mit dem erfindungsgemäßen Interferometer.

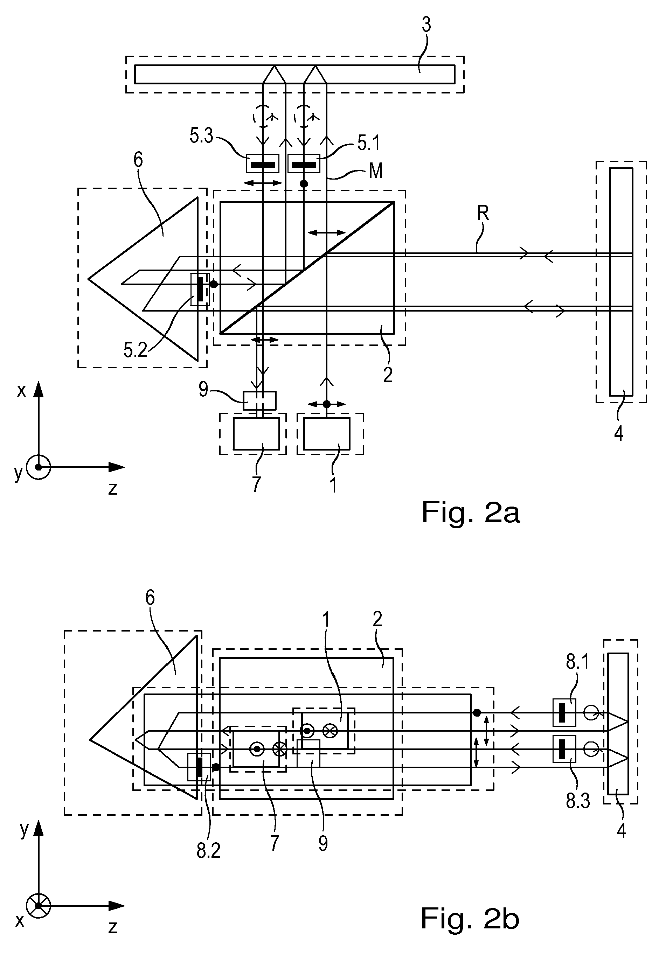

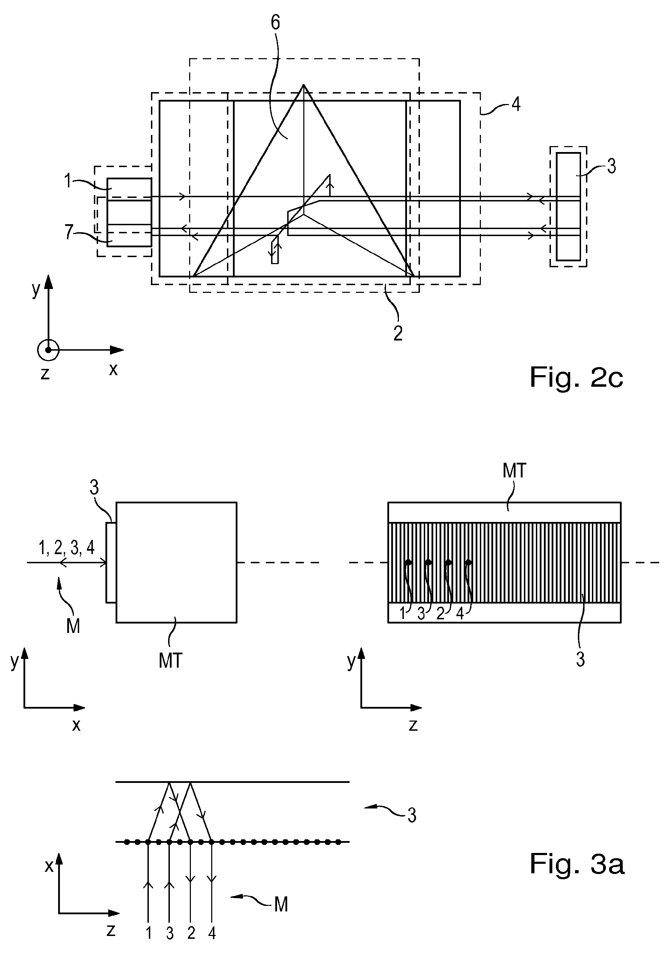

Anhand der Figuren 2a - 2c wird nachfolgend ein Ausführungsbeispiel des erfindungsgemäßen Interferometers erläutert. Diese Figuren zeigen den zur Signalerzeugung genutzten Strahlengang in verschiedenen Ansichten. Es sei darauf hingewiesen, dass aus Gründen der besseren Übersichtlichkeit nicht in allen Ansichten alle Komponenten des erfindungsgemäßen Interferometers dargestellt sind. So sind bestimmte polarisationsoptische Elemente 5.1 - 5.3 etwa nur in Figur 2a und andere polarisationsoptische Elemente 8.1 - 8.3 nur in Figur 2b gezeigt; in Figur 2c sind diese polarisationsoptischen Elemente 5.1 - 5.3, 8.1 - 8.3 komplett weggelassen. Ebenfalls aus Übersichtlichkeitsgründen sind in Figur 2a lediglich die verschiedenen Polarisationszustände des Messstrahlenbündels M dargestellt, in Figur 2b nur die Polarisationszustände des Referenzstrahlenbündels R, während in Figur 2c dies weggelassen wurde.

Das dargestellte Interferometer umfasst eine Lichtquelle 1, die ein linear polarisiertes Strahlenbündel in Richtung eines Strahlteilers 2 emittiert. Als Lichtquelle 1 dient vorzugsweise eine kohärente Laser-Lichtquelle, als Strahlteiler 2 ist im dargestellten Beispiel ein polarisationsoptischer Strahlteilerwürfel vorgesehen. Über den Strahlteiler 2 wird das darauf einfallende Strahlenbündel in ein p-polarisiertes Messstrahlenbündel M und ein s-polarisiertes Referenzstrahlenbündel R aufgeteilt. In den Figuren 2a, 2b sind die Polarisationszustände in den verschiedenen Strahlenbündeln durchgängig wie folgt gekennzeichnet:
• : s-Polarisation
↕ : p-Polarisation
'○ : elliptische Polarisation

Zunächst sei nachfolgend der Strahlengang des Messstrahlenbündels zwischen der Aufspaltung am Strahlteiler 2 und der Wiedervereinigung mit dem Referenzstrahlenbündel R an der Detektoranordnung 7 erläutert. Das Messstrahlenbündel M propagiert hierbei zunächst unabgelenkt in einem sich in einer ersten Richtung x erstreckenden Messarm zwischen dem Strahlteiler 2 und einem Messreflektor 3. Der Messreflektor 3 ist gegenüber den restlichen Interferometer-Komponenten entlang der ersten Richtung x beweglich angeordnet; über das erfindungsgemäße Interferometer wird die Entfernung zum Messreflektor 3 bestimmt. Die Richtung x entspricht im dargestellten Ausführungsbeispiel somit der Messrichtung.

Der Messreflektor 3 kann z.B. in einer - nicht dargestellten - Maschine an einem entlang der x-Richtung beweglichen Maschinenteil angeordnet sein, dessen Position hochgenau zu bestimmen ist. Die über das erfindungsgemäße Interferometer erzeugten Interferenzsignale können von einer - ebenfalls nicht dargestellten - Maschinensteuerung zur Positionierung des Maschinenteils genutzt werden.

Am Messreflektor 3 erfährt das darauf erstmalig einfallende Messstrahlenbündel M bei der Rückreflexion in Richtung des Strahlteilers 2 dann einen Versatz senkrecht zur Einfallsrichtung in einer ersten Versatzebene xz, die durch die beiden Richtungen x und z aufgespannt wird. Zur erfindungsgemäßen Ausbildung des Messreflektors 3 sei auf die nachfolgende Beschreibung der Figuren 3a - 5 verwiesen, zunächst sei nachfolgend der weitere Strahlverlauf des Messstrahlenbündels M erläutert. Das vom Messreflektor 3 erstmalig reflektierte Messstrahlenbündel M besitzt wie in Figur 2a angedeutet nach der Reflexion eine elliptische Polarisation. Nach dem Durchlaufen eines polarisationsoptischen Elements 5.1, das einen Linearpolarisator und ein Lambda/2-Plättchen umfasst, ist das Messstrahlenbündel M s-polarisiert und wird vom Strahlteiler 2 in Richtung eines Retroreflektors 6 reflektiert. Der Retroreflektor 6 ist im dargestellten Ausführungsbeispiel als Tripelspiegel ausgebildet und bewirkt eine Rückreflexion des Messstrahlenbündels M in Richtung des Strahlteilers 2. Zwischen dem Retroreflektor 6 und dem Strahlteiler 2 ist ein weiteres polarisationsoptisches Element 5.2 angeordnet, das als Linearpolarisator ausgebildet ist. Über dieses polarisationsoptische Element 5.2 erfährt das Messstrahlenbündel M eine s-Polarisation und wird dann vom Strahlteiler 2 in Richtung des Messreflektors 3 reflektiert. Analog zur ersten erfolgenden Reflexion des Messstrahlenbündels M am Messreflektor 3 erfolgt eine zweite Reflexion des Messstrahlenbündels M in Richtung des Strahlteilers 2, wobei über den Messreflektor 3 wiederum ein Versatz zwischen dem nunmehr zum zweiten Mal darauf einfallenden Messstrahlenbündel M und dem davon zum Strahlteiler 2 zurückreflektierten Messstrahlenbündel M senkrecht zur Einfallsrichtung in der ersten Versatzebene xz bewirkt wird, die durch die beiden Richtungen x und z aufgespannt wird.

Nach der zweiten Reflexion am Messreflektor 3 durchläuft das Messstrahlenbündel ein weiteres polarisationsoptisches Element 5.3, das einen Linearpolarisator und ein Lambda/2-Plättchen umfasst, und erfährt darüber eine p-Polarisation. Vom Strahlteiler wird das derart polarisierte Messstrahlenbündel M unabgelenkt in Richtung einer nachgeordneten Detektoranordnung 7 durchgelassen.

Im Folgenden wird nunmehr der Strahlengang des Referenzstrahlenbündels R erläutert. Das s-polarisierte Referenzstrahlenbündel R wird am Strahlteiler 2 in einen sich in einer zweiten Richtung z erstreckenden Referenzarm reflektiert, der sich zwischen dem Strahlteiler 2 und einem Referenzreflektor 4 erstreckt. Im dargestellten Ausführungsbeispiel ist die zweite Richtung z senkrecht zur ersten Richtung x orientiert; eine derartige Relativanordnung des Referenzarmes zum Messarm ist im Rahmen der vorliegenden Erfindung aber nicht zwingend erforderlich, denkbar wäre z.B. alternativ auch eine parallele Anordnung von Mess- und Referenzarm.

Das Referenzstrahlenbündel R gelangt sodann ein erstes Mal auf einen fest angeordneten Referenzreflektor 4. Der Referenzreflektor 4 ist im vorliegenden Ausführungsbeispiel identisch zum Messreflektor 3 ausgebildet und bewirkt eine Rückreflexion des darauf einfallenden Referenzstrahlenbündels R in Richtung des Strahlteilers 3, wobei das Referenzstrahlenbündel R hierbei einen Versatz in einer zweiten Versatzebene yz erfährt; die zweite Versatzebene wird wie aus Figur 2b ersichtlich durch die dritte Richtung y und die zweite Richtung z aufgespannt. Wie aus den Figuren 2a - 2c ersichtlich steht die dritte Richtung y senkrecht auf den beiden anderen Richtungen x und z.

In Bezug auf die konkrete Ausbildung des Referenzreflektors dieses Ausführungsbeispiels sei ebenfalls auf die nachfolgende Erläuterung der Figuren 3a - 5 verwiesen. Es sei ferner darauf hingewiesen, dass es im Rahmen der vorliegenden Erfindung nicht zwingend notwendig ist, den Referenzreflektor 4 identisch zum Messreflektor 3 auszubilden; grds. wären hier auch alternative Ausführungsmöglichkeiten für den Referenzreflektor denkbar, z.B. als sog. Katzenauge in diffraktiver Ausbildung oder in Form zweier Reflektoren in 90°-Anordnung etc..

Das vom Referenzreflektor 4 zurückreflektierte Referenzstrahlenbündel R mit nunmehr elliptischer Polarisation durchläuft anschließend ein polarisationsoptisches Element 8.1, das einen Linearpolarisator und ein Lambda/2-Plättchen umfasst, und wird hierbei in ein linear p-polarisiertes Strahlenbündel umgewandelt. Das derart polarisierte Referenzstrahlenbündel R durchtritt dann unabgelenkt den Strahlteiler 2 in Richtung des Retroreflektors 6 und wird darüber in Richtung des Strahlteilers 2 zurückreflektiert. Zwischen dem Retroreflektor 6 und dem Strahlteiler 2 erfährt das Referenzstrahlenbündel R über das polarisationsoptische Element 8.2 in Form eines Linearpolarisators eine p-Polarisation, so dass es erneut den Strahlteiler 2 durchläuft und ein weiteres Mal in Richtung des Referenzreflektors 4 propagiert. Dort erfolgt eine zweite Rückreflexion in Richtung des Strahlteilers 2 analog zur ersten Rückreflexion, nämlich unter einem Versatz des Referenzstrahlenbündels R in der zweiten Versatzebene yz in y-Richtung. Nach der Rückreflexion am Referenzreflektor 4 durchläuft das Referenzstrahlenbündel R ein weiteres polarisationsoptisches Element 8.3, das einen Linearpolarisator und ein Lambda/2-Plättchen umfasst, über das es in einen s-polarisierten Zustand umgewandelt wird und dann vom Strahlteiler 2 in Richtung der Detektoranordnung 7 zur interferierenden Überlagerung mit dem Messstrahlenbündel M abgelenkt wird.

In Richtung der Detektoranordnung 7 propagieren somit miteinander überlagert nach dem letzten Verlassen des Strahlteilers 2 das p-polarisierte Messstrahlenbündel M sowie das s-polarisierte Referenzstrahlenbündel R. Die beiden überlagerten Strahlenbündel M, R durchlaufen vor der Detektoranordnung 7 noch ein weiteres polarisationsoptisches Element 9, nämlich ein λ/4-Plättchen, über das die p- und s-polarisierten Strahlenbündel M, R in entgegengesetzt zirkular polarisierte Strahlenbündel umgewandelt werden. In der Detektoranordnung 7 erfolgt sodann eine - nicht in den Figuren dargestellte - Aufspaltung der überlagerten Strahlenbündel in drei Teilstrahlenbündel, die sodann jeweils einen Polarisator durchlaufen, bevor diese auf optoelektronische Detektorelemente treffen, an denen drei phasenverschobene, abstandsabhängige Interferenzsignale resultieren. Diese können dann als Maß für die Position des Messreflektors 3 entlang der Messrichtung x in bekannter Art und Weise weiterverarbeitet werden.

Über vorgesehene Ausbildung des Messreflektors 3 wird im erfindungsgemäßen Interferometer jeweils ein Versatz zwischen dem auf den Messreflektor 3 einfallenden Messstrahlenbündel M und dem davon zurückreflektierten Messstrahlenbündel M bewirkt. Es resultiert hierbei ein Versatz senkrecht zur Einfallsrichtung, nämlich in einer ersten Versatzebene xz, die im erläuterten Ausführungsbeispiel durch die erste Richtung x bzw. Messrichtung x und die zweite Richtung z aufgespannt wird. Aufgrund dieser räumlichen Trennung des auf den Messreflektor 3 einfallenden und davon zurückreflektierten Messstrahlenbündels M lassen sich die gewünschten Polarisationszustände definiert einstellen. Hierzu wird im Strahlengang des zurückreflektierten Messstrahlenbündels M das polarisationsoptische Element 5.1 bzw. 5.3 angeordnet und auf diese Art und Weise jeweils der erforderliche Polarisationszustand des in Richtung des Strahlteilers 2 propagierenden Messstrahlenbündels M gezielt eingestellt. Eventuell am Messreflektor 3 resultierende Fehlpolarisationen des Messstrahlenbündels M lassen sich auf diese Art und Weise eliminieren bzw. wegfiltern. Desweiteren wird durch den resultierenden Versatz gewährleistet, dass bestimmte Mehrfachdurchläufe der Strahlenbündel, die durch ggf. verbleibende Fehlpolarisationen verursacht werden, räumlich versetzt zu denjenigen Strahlenbündeln verlaufen, die zur Erzeugung der positionsabhängigen Interferenzsignale beitragen. Auf diese Art und Weise gelangen die fehlpolarisierten Strahlenbündel nicht auf die Detektoranordnung 7.

Analog hierzu kann dies durch die Verwendung eines entsprechend ausgebildeten Referenzreflektors 4 im Referenzarm für das Referenzstrahlenbündel R erfolgen. Die resultierende zweite Versatzebene yz für das reflektierte Referenzstrahlenbündel R steht hierbei senkrecht auf der ersten Versatzebene xz im Messarm.

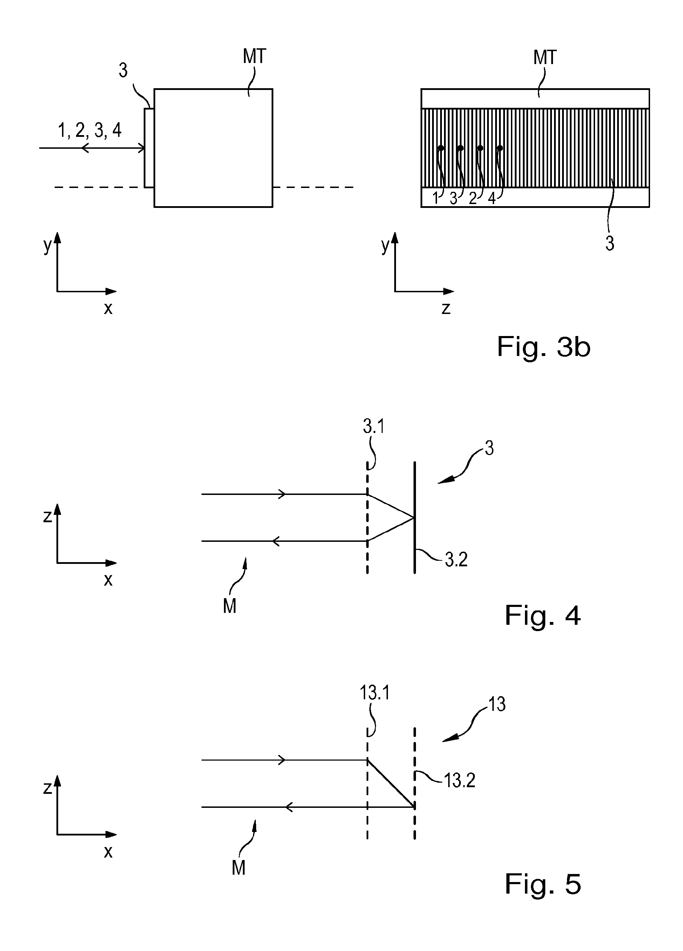

Eine Variante eines derartigen Messreflektors 3, wie er etwa im erläuterten Ausführungsbeispiel des erfindungsgemäßen Interferometers eingesetzt werden kann, ist in Figur 4 in schematisierter Form dargestellt. Der Messreflektor 3 umfasst hier mindestens ein Transmissionsgitter 3.1, beispielsweise ein geeignetes Phasengitter, sowie ein Reflektorelement 3.2, das im vorliegenden Beispiel als Planspiegel ausgebildet und dessen reflektierende Fläche in Richtung des Transmissionsgitters 3.1 orientiert ist.

Wie aus Figur 4 ersichtlich, beaufschlagt das entlang der Messrichtung x einfallende Messstrahlenbündel M zunächst das Transmissionsgitter 3.1 an einem ersten Auftreffort. Dort erfährt es über eine resultierende Beugung am Transmissionsgitter 3.1 eine Ablenkung in der ersten Versatzebene xz, die durch die erste Richtung x und die zweite Richtung z aufgespannt wird. Am Reflektorelement 3.2 wird das Messstrahlenbündel M wieder in Richtung des Transmissionsgitters 3.1 zurückreflektiert und beaufschlagt dieses an einem zweiten Auftreffort. Dort erfährt es unter Beugung eine weitere Ablenkung in der ersten Versatzebene xz und propagiert anschließend parallel versetzt zum einfallenden Messstrahlenbündel M zurück in Richtung des - nicht dargestellten - Strahlteilers.

Eine hierzu alternative Ausführungsform eines geeigneten Messreflektors 13 ist in Figur 5 schematisiert dargestellt. Dieser umfasst wiederum ein Transmissionsgitter 13.1; das Reflektorelement 13.2 ist nunmehr aber nicht als Planspiegel, sondern als Reflexionsgitter ausgebildet. Wie aus Figur 5 ersichtlich, resultiert darüber am ersten Auftreffort des von links einfallenden Messstrahlenbündels M eine Ablenkwirkung in der ersten Versatzebene. Vom entsprechend dimensionierten Reflexionsgitter wird das Messstrahlenbündel M senkrecht auf den zweiten Auftreffort am Transmissionsgitter 13.1 zurückreflektiert, das vom Messstrahlenbündel M dann ohne weitere resultierende Ablenkwirkung durchlaufen wird. Auch diese Messreflektorvariante bewirkt den gewünschten Parallel-Versatz zwischen den auf den Messreflektor 13 ein- und ausfallenden Messstrahlenbündel in der Versatzebene und ermöglicht die bereits oben erläuterte gezielte Anordnung polarisationsoptischer Elemente in den jeweiligen Strahlengängen.

Neben diesen beiden dargestellten Ausführungsformen können im Rahmen der vorliegenden Erfindung auch noch weitere alternative Varianten von Messreflektoren zum Einsatz kommen, in denen z.B. mehr als zwei resultierende Beugungen und/oder Reflexionen des Messstrahlenbündels vorgesehen sind etc..

Entsprechend zu derartigen Varianten des Messreflektors kann wie bereits erwähnt auch der Referenzreflektor im erfindungsgemäßen Interferometer ausgebildet werden.

Anhand der Figuren 3a und 3b sei vergleichbar zur Darstellung in den Figuren 1a und 1b nachfolgend erläutert, wie über die erfindungsgemäßen Maßnahmen nunmehr ein invariantes Spotpattern auf dem Messreflektor erzeugbar ist, auch wenn der Messreflektor sich entlang einer Richtung y bewegt, die von der eigentlichen Messrichtung x abweicht. Aufgrund der anderen Anordnung von Mess- und Referenzarm gegenüber dem Stand der Technik ist nunmehr die Abweichrichtung nicht die Richtung z, sondern die Richtung y; es handelt sich hierbei aber wie im Stand der Technik um eine Richtung, die orthogonal zur Messrichtung x orientiert ist.

So zeigt Figur 3a den Zustand, in dem das entlang der Messrichtung x bewegliche Maschinenteil mit dem Messreflektor 3 sich entlang der y-Richtung in der Sollposition befindet. Es resultiert das in Figur 3a rechts dargestellte lineare Spotpattern. Analog zu Figur 1a sind auch in Figur 3a die einzelnen Messstrahlenbündel mit den Bezeichnungen 1 - 4 versehen. Der untere Teil der Figur 3a zeigt eine Draufsicht auf den Messreflektor 3 in dieser Position inklusive dem Verlauf des Messstrahlenbündel M in der ersten Versatzebene xz.

Figur 3b zeigt denjenigen Zustand, in dem das Maschinenteil MT entlang der dritten Richtung y verschoben wurde. Wie aus dem rechten Teil von Figur 3b ersichtlich, resultiert ein wiederum lineares Spotpattern, das sich gegenüber dem Sollzustand in Figur 3a nicht verändert hat; es liegt demzufolge das angestrebte invariante Spotpattern auf dem Messreflektor 3 vor.

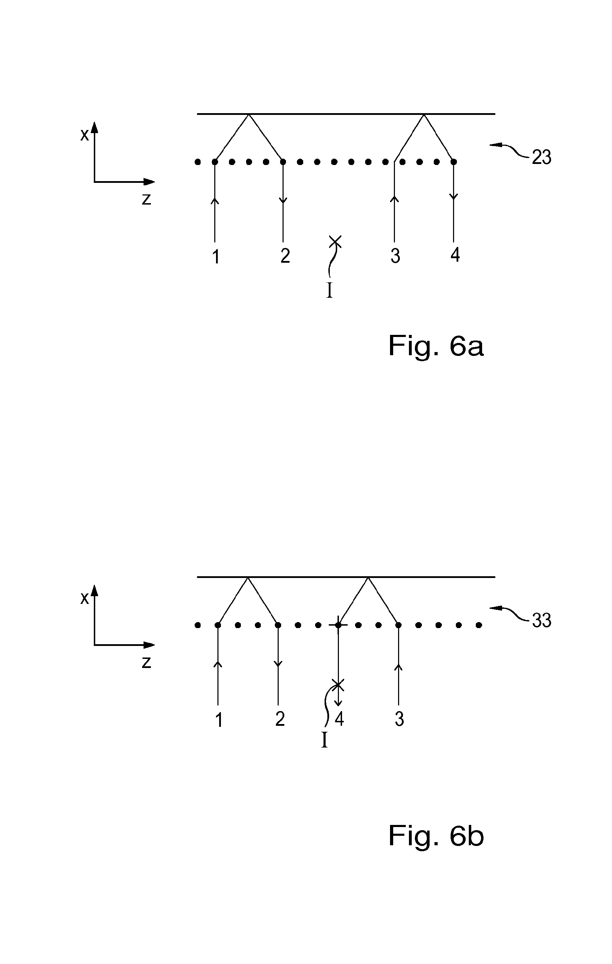

Anhand der Figuren 6a und 6b soll abschließend noch veranschaulicht werden, dass es über die jeweilige Ausbildung des Messreflektors 23, 33 und/oder dessen Relativpositionierung zum Retroreflektor möglich ist, nicht nur das in Figur 3a, unten dargestellte Spotpattern mit den vier ein- und ausfallenden Messstrahlenbündeln in der gezeigten Anordnung zu erzeugen. Seitens des verwendeten Retroreflektors ist in den Figuren 6a, 6b lediglich das Inversionszentrum I angedeutet, um anzudeuten, dass in diesen beiden Fällen jeweils unterschiedliche Relativpositionen des Messreflektors 23, 33 und des Retroreflektors vorgesehen sind. Es können demzufolge auch die in den Figuren 6a und 6b gezeigten alternativen Spotpattern mit anderen Anordnungen der einzelnen Messstrahlenbündel im erfindungsgemäßen Interferometer realisiert werden. Darüber hinaus gibt es selbstverständlich noch weitere Varianten.

## Patentansprüche

1. Interferometer zur Messung der Position eines Messreflektors entlang mindestens einer ersten Richtung, mit
- einer Lichtquelle,
- einem Strahlteiler, der das von der Lichtquelle emittierte Strahlenbündel in ein Messstrahlenbündel und ein Referenzstrahlenbündel aufteilt,
- einem sich in der ersten Richtung erstreckenden Messarm, in dem das Messstrahlenbündel zwischen dem Strahlteiler und dem entlang der ersten Richtung beweglichen Messreflektor propagiert, wobei der Messreflektor einen Versatz zwischen dem darauf einfallenden Messstrahlenbündel und dem davon zurückreflektierten Messstrahlenbündel senkrecht zur Einfallsrichtung bewirkt,
- einem sich in einer zweiten Richtung erstreckenden Referenzarm, in dem das Referenzstrahlenbündel zwischen dem Strahlteiler und einem Referenzreflektor propagiert und
- einer Detektoranordnung, der die am Strahlteiler überlagerten und wiedervereinigten Mess- und Referenzstrahlenbündel zuführbar sind und über die ein abstandsabhängiges Interferenzsignal bezüglich der Position des Messreflektors entlang der ersten Richtung erzeugbar ist,
**dadurch gekennzeichnet,**
**dass** der Messreflektor (3; 13) jeweils mindestens ein Transmissionsgitter (3.1; 13.1) sowie ein Reflektorelement (3.2; 13.2) umfasst.

2. Interferometer nach Anspruch 1, **dadurch gekennzeichnet, dass** der Messreflektor (3) derart ausgebildet und angeordnet ist, dass das darauf entlang der ersten Richtung (x) einfallende Messstrahlenbündel (M) zunächst das Transmissionsgitter (3.1) an einem ersten Auftreffort beaufschlagt und eine erste Ablenkung in einer ersten Versatzebene (xz) erfährt, dann am Reflektorelement (3.2) wieder in Richtung des Transmissionsgitters (3.1) zurückreflektiert wird und das Transmissionsgitter (3.1) an einem zweiten Auftreffort beaufschlagt, wo das Messstrahlenbündel (M) eine zweite Ablenkung in der ersten Versatzebene (xz) erfährt und dann gegenüber der Einfallsrichtung entlang der zweiten Richtung (z) parallel versetzt in Richtung des Strahlteilers (2) propagiert.

3. Interferometer nach Anspruch 2, **dadurch gekennzeichnet, dass** die erste Versatzebene (xz) durch die erste Richtung (x) und die zweite Richtung (z) aufgespannt ist.

4. Interferometer nach Anspruch 1, **dadurch gekennzeichnet, dass** der Referenzreflektor (4) jeweils mindestens ein Transmissionsgitter sowie ein Reflektorelement umfasst.

5. Interferometer nach Anspruch 2 und 4, **dadurch gekennzeichnet, dass** der Referenzreflektor (4) derart ausgebildet und angeordnet ist, dass
- das darauf entlang der zweiten Richtung (z) einfallende Referenzstrahlenbündel (R) zunächst das Transmissionsgitter an einem ersten Auftreffort beaufschlagt und eine erste Ablenkung in einer zweiten Versatzebene (yz) erfährt, wobei die zweite Versatzebene (yz) senkrecht zur ersten Versatzebene (xz) orientiert ist,
- dann das Referenzstrahlenbündel (R) am Reflektorelement wieder in Richtung des Transmissionsgitters zurückreflektiert wird und das Transmissionsgitter an einem zweiten Auftreffort beaufschlagt, wo das Referenzstrahlenbündel eine zweite Ablenkung in der zweiten Versatzebene (yz) erfährt und dann gegenüber der Einfallsrichtung entlang einer dritten Richtung (y) parallel versetzt in Richtung des Strahlteilers (2) propagiert.

6. Interferometer nach Anspruch 5, **dadurch gekennzeichnet, dass** die zweite Versatzebene (yz) durch die zweite Richtung (z) und die dritte Richtung (y) aufgespannt ist, wobei die dritte Richtung (y) senkrecht zur ersten (x) und zweiten (z) Richtung orientiert ist.

7. Interferometer nach Anspruch 1 oder 4, **dadurch gekennzeichnet, dass** das Reflektorelement (3.1) als Planspiegel ausgebildet ist.

8. Interferometer nach Anspruch 1 oder 4, **dadurch gekennzeichnet, dass** das Reflektorelement (13.2) als Reflexionsgitter ausgebildet ist.

9. Interferometer nach Anspruch 1, **dadurch gekennzeichnet, dass** im Strahlengang des vom Messreflektor (3; 13) zurückreflektierten Messstrahlenbündels (M) ein polarisationsoptisches Element (5.1, 5.3) angeordnet ist.

10. Interferometer nach Anspruch 4, **dadurch gekennzeichnet, dass** im Strahlengang des vom Referenzreflektor (4) zurückreflektierten Referenzstrahlenbündels (R) ein polarisationsoptisches Element (8.1, 8.3) angeordnet ist.

11. Interferometer nach Anspruch 9 oder 10, **dadurch gekennzeichnet, dass** das polarisationsoptische Element (5.1, 5.3, 8.1, 8.3) als Linearpolarisator oder als Kombination eines Linearpolarisators und eines Lambda/2-Plättchens ausgebildet ist.

12. Interferometer nach Anspruch 1, **dadurch gekennzeichnet, dass** die erste Richtung (x) und die zweite Richtung (z) senkrecht zueinander orientiert sind.

13. Interferometer nach mindestens einem der vorhergehenden Ansprüche, **dadurch gekennzeichnet, dass** die vom Messreflektor (3) und vom Referenzreflektor (4) erstmalig zurückreflektierten Mess- und Referenzstrahlenbündel (M, R) nach dem Durchlaufen des Strahlteilers (2) jeweils auf einen Retroreflektor (6) auftreffen, über welches das Mess- und Referenzstrahlenbündel (M, R) jeweils eine räumlich versetzte Rückreflexion in Richtung des Strahlteilerelements (2) erfahren, dieses durchlaufen und dann ein zweites Mal den Messreflektor (3) und den Referenzreflektor (4) beaufschlagen, bevor die davon zurückreflektierten Mess- und Referenzstrahlenbündel (M, R) an der Detektoranordnung (7) zur interferierenden Überlagerung kommen.

## Claims

1. Interferometer for measuring the position of a measurement reflector along a first direction, comprising:
- a light source,
- a beam splitter, which splits the beam emitted by the light source into a measurement beam and a reference beam,
- a measurement arm extending in the first direction, in which measurement arm the measurement beam propagates between the beam splitter and the measurement reflector, which is moveable along the first direction, wherein the measurement reflector brings about an offset between the measurement beam incident thereon and the measurement beam reflected back therefrom perpendicular to the direction of incidence,
- a reference arm extending in a second direction, in which reference arm the reference beam propagates between the beam splitter and a reference reflector, and
- a detector arrangement, to which the measurement and reference beam superimposed and recombined at the beam splitter can be fed and by means of which a distance-dependent interference signal with regard to the position of the measurement reflector along the first direction can be generated,
**characterized in that**
the measurement reflector (3; 13) comprises in each case at least one transmission grating (3.1; 13.1) and a reflector element (3.2; 13.2).

2. Interferometer according to Claim 1, **characterized in that** the measurement reflector (3) is embodied and arranged in such a way that the measurement beam (M) incident thereon along the first direction (x) firstly impinges on the transmission grating (3.1) at a first impingement location and experiences a first deflection in a first offset plane (xz) then is reflected back again in the direction of the transmission grating (3.1) at the reflector element (3.2) and impinges on the transmission grating (3.1) at a second impingement location, where the measurement beam (M) experiences a second deflection in the first offset plane (xz) and then propagates relative to the direction of incidence along the second direction (z) parallel in an offset fashion in the direction of the beam splitter (2).

3. Interferometer according to Claim 2, **characterized in that** the first offset plane (xz) is spanned by the first direction (x) and the second direction (z).

4. Interferometer according to Claim 1, **characterized in that** the reference reflector (4) comprises in each case at least one transmission grating and a reflector element.

5. Interferometer according to Claims 2 and 4, **characterized in that** the reference reflector (4) is embodied and arranged in such a way that
- the reference beam (R) incident thereon along the second direction (z) firstly impinges on the transmission grating at a first impingement location and experiences a first deflection in a second offset plane (yz), wherein the second offset plane (yz) is oriented perpendicular to the first offset plane (xz),
- then the reference beam (R) is reflected back again in the direction of the transmission grating at the reflector element and impinges on the transmission grating at a second impingement location, where the reference beam experiences a second deflection in the second offset plane (yz) and then propagates relative to the direction of incidence along a third direction (y) parallel in an offset fashion in the direction of the beam splitter (2).

6. Interferometer according to Claim 5, **characterized in that** the second offset plane (yz) is spanned by the second direction (z) and the third direction (y), wherein the third direction (y) is oriented perpendicular to the first (x) and second (z) directions.

7. Interferometer according to Claim 1 or 4, **characterized in that** the reflector element (3.1) is embodied as a plane mirror.

8. Interferometer according to Claim 1 or 4, **characterized in that** the reflector element (13.2) is embodied as a reflection grating.

9. Interferometer according to Claim 1, **characterized in that** a polarization-optical element (5.1, 5.3) is arranged in the beam path of the measurement beam (M) reflected back by the measurement reflector (3; 13).

10. Interferometer according to Claim 4, **characterized in that** a polarization-optical element (8.1, 8.3) is arranged in the beam path of the reference beam (R) reflected back by the reference reflector (4).

11. Interferometer according to Claim 9 or 10, **characterized in that** the polarization-optical element (5.1, 5.3, 8.1, 8.3) is embodied as a linear polarizer or as a combination of a linear polarizer and a lambda/2 plate.

12. Interferometer according to Claim 1, **characterized in that** the first direction (x) and the second direction (z) are oriented perpendicular to one another.

13. Interferometer according to at least one of the preceding claims, **characterized in that** the measurement and reference beams (M, R) reflected back by the measurement reflector (3) and by the reference reflector (4) for the first time, after passing through the beam splitter (2), in each case impinge on a retroreflector (6), via which the measurement and reference beams (M, R) in each case experience a spatially offset back-reflection in the direction of the beam splitter element (2), pass through the latter and then impinge on the measurement reflector (3) and the reference reflector (4) a second time before the measurement and reference beams (M, R) reflected back therefrom attain interfering superimposition at the detector arrangement (7).

## Revendications

1. Interféromètre destiné à mesurer la position d'un réflecteur de mesure suivant une première direction, comportant
- une source de lumière,
- un diviseur de faisceau qui divise le faisceau émis par la source de lumière en un faisceau de mesure et un faisceau de référence,
- un bras de mesure s'étendant dans la première direction, dans lequel le faisceau de mesure se propage entre le diviseur de faisceau et le réflecteur de mesure mobile suivant la première direction, dans lequel le réflecteur de mesure provoque un décalage entre le faisceau de mesure incident sur celui-ci et le faisceau de mesure rétroréfléchi par celui-ci perpendiculairement à la direction d'incidence,
- un bras de référence s'étendant dans une deuxième direction, dans lequel le faisceau de référence se propage entre le diviseur de faisceau et un réflecteur de référence et
- un dispositif détecteur vers lequel peuvent être acheminés les faisceaux de mesure et de référence superposés et réunis au niveau du diviseur de faisceau et au moyen duquel peut être généré un signal d'interférence dépendant de la distance par rapport à la position du réflecteur de mesure suivant la première direction,
**caractérisé en ce que**
le réflecteur de mesure (3 ; 13) comprend respectivement au moins un réseau de transmission (3.1 ; 13.1) ainsi qu'un élément réflecteur (3.2 ; 13.2).

2. Interféromètre selon la revendication 1, **caractérisé en ce que** le réflecteur de mesure (3) est réalisé et agencé de manière à ce que le faisceau de mesure (M) incident sur celui-ci suivant la première direction (x) soit d'abord incident sur le réseau de transmission (3.1) en un premier point d'incidence et subisse une première déviation dans un premier plan de décalage (xz), puis à ce qu'il soit de nouveau rétroréfléchi par l'élément réflecteur (3.2) dans la direction du réseau de transmission (3.1) et soit incident sur le réseau de transmission (3.1) en un deuxième point d'incidence où le faisceau de mesure (M) subit une deuxième déviation dans le premier plan de décalage (xz) puis se propage de manière décalée parallèlement dans la direction du diviseur de faisceau (2) par rapport à la direction d'incidence suivant la deuxième direction (z).

3. Interféromètre selon la revendication 2, **caractérisé en ce que** le premier plan de décalage (xz) est défini par la première direction (x) et la deuxième direction (z).

4. Interféromètre selon la revendication 1, **caractérisé en ce que** le réflecteur de référence (4) comprend respectivement au moins un réseau de transmission et un élément réflecteur.

5. Interféromètre selon les revendications 2 et 4, **caractérisé en ce que** le réflecteur de référence (4) est réalisé et agencé de manière à ce que
- le faisceau de référence (R) incident sur celui-ci suivant la deuxième direction (z) soit d'abord incident sur le réseau de transmission en un premier point d'incidence et subisse une première déviation dans un deuxième plan de décalage (yz), dans lequel le deuxième plan de décalage (yz) est orienté perpendiculairement au premier plan de décalage (xz),
- le faisceau de référence (R) soit de nouveau rétroréfléchi par l'élément réflecteur dans la direction du réseau de transmission et soit incident sur le réseau de transmission en un deuxième point d'incidence où le faisceau de mesure subit une deuxième déviation dans le deuxième plan de décalage (yz) puis se propage de manière décalée parallèlement dans la direction du diviseur de faisceau (2) par rapport à la direction d'incidence suivant un troisième direction (y).

6. Interféromètre selon la revendication 5, **caractérisé en ce que** le deuxième plan de décalage (yz) est défini par la deuxième direction (z) et la troisième direction (y), dans lequel la troisième direction (y) est orientée perpendiculairement aux première (x) et deuxième (z) directions.

7. Interféromètre selon la revendication 1 ou 4, **caractérisé en ce que** l'élément réflecteur (3.1) est réalisé sous la forme d'un miroir plan.

8. Interféromètre selon la revendication 1 ou 4, **caractérisé en ce que** l'élément réflecteur (13.2) est réalisé sous la forme d'un réseau de réflexion.

9. Interféromètre selon la revendication 1, **caractérisé en ce qu'**un élément optique de polarisation (5.1, 5.3) est disposé sur le chemin optique du faisceau de mesure (M) rétroréfléchi par le réflecteur de mesure (3 ; 13).

10. Interféromètre selon la revendication 4, **caractérisé en ce qu'**un élément optique de polarisation (8.1, 8.3) est disposé sur le chemin optique du faisceau de référence (R) rétroréfléchi par le réflecteur de référence (4).

11. Interféromètre selon la revendication 9 ou 10, **caractérisé en ce que** l'élément optique de polarisation (5.1, 5.3, 8.1, 8.3) est réalisé sous la forme d'un polariseur linéaire ou d'une combinaison d'un polariseur linéaire et d'une lame lambda/2.

12. Interféromètre selon la revendication 1, **caractérisé en ce que** la première direction (x) et la deuxième direction (z) sont orientées perpendiculairement l'une à l'autre.

13. Interféromètre selon au moins l'une des revendications précédentes, **caractérisé en ce que** les faisceaux de mesure et de référence (M, R) rétroréfléchis une première fois par le réflecteur de mesure (3) et par le réflecteur de référence (4) sont respectivement incidents, après passage à travers le diviseur de faisceau (2), sur un rétroréflecteur (6) au moyen duquel les faisceaux de mesure et de référence (M, R) subissent un rétroréflexion décalée spatialement dans la direction de l'élément diviseur de faisceau (2), **en ce qu'**ils passent à travers celui-ci, puis **en ce qu'**ils sont incidents une deuxième fois sur le réflecteur de mesure (3) et sur le réflecteur de référence (4), avant que les faisceaux de mesure et de référence (M, R) rétroréfléchis par celui-ci se superposent de manière à interférer au niveau du dispositif détecteur (7).
